# FASCICULE DE BREVET EUROPEEN

(11) **EP 3 740 947 B1**
(45) Date de publication et mention de la délivrance du brevet: **15.10.2025**
(21) Numéro de dépôt: 19703774.0
(22) Date de dépôt: 10.01.2019
(51) Int. Cl.: G09B 21/00

(54) **CARTE DE MOBILITE AUDIO**
AUDIOMOBILITÄTSKARTE
AUDIO MOBILITY MAP

(30) Priorité: 16.01.2018 FR 1850334
(43) Date de publication de la demande: 25.11.2020
(73) Titulaire: FEELOBJECT, 31100 Toulouse (FR)
(72) Inventeur: HUIN, Sylvain, 31830 Plaisance Du Touch (FR)
(74) Mandataire: IP Trust
(86) Numéro de dépôt international: PCT/FR2019/050049
(87) Numéro de publication internationale: WO 2019/141922

(56) Documents cités:
- US-A1- 2012 123 784
- US-A1- 2016 148 517

## Description

### Domaine technique de l'invention

La présente invention porte sur une carte de mobilité qui fournit à une personne mal ou non-voyante les renseignements structuraux d'un endroit, par exemple le plan de chaque étage d'un bâtiment.

La présente invention porte également sur une méthode de fabrication et d'utilisation d'une telle carte de mobilité, qui peut fournir à une personne ayant une déficience visuelle les informations structurelles de manière tactile et auditive.

### Etat de l'art

Lorsqu'une personne malvoyante veut se rendre à un endroit qu'elle ne connaît pas par cœur, elle a besoin de l'aide d'une carte ou d'un plan. À la différence des personnes qui peuvent voir une carte, les déficients visuels lisent une carte en la touchant. Habituellement, la carte tactile est composée de symboles gravés en relief sur la surface d'un plan. Le document US2008/0280265 décrit une carte de mobilité comprenant une série de symboles gravés et/ou d'autres pictogrammes en relief combinant le code Braille et d'autres symboles alphanumériques. Ces symboles sont exposés sur une surface et sont composés de deux panneaux différents réunis pour former une carte ou un plan de mobilité. Un système de mobilité hiérarchique à plusieurs niveaux est également prévu pour permettre aux personnes malvoyantes de se déplacer librement et de se repérer non seulement à l'intérieur d'une structure comme un bâtiment, mais aussi à l'intérieur de nombreux niveaux géographiques comme les États, les villes et les quartiers, sans perdre la liaison structurelle et/ou spatiale entre les différents niveaux.

L'inconvénient de cette technologie est que l'utilisateur doit mémoriser la signification de tous les symboles ou pictogrammes de la carte pour pouvoir lire en touchant la carte de mobilité sans l'aide d'une autre personne. Il lui manque d'autres moyens simples pour confirmer son interprétation de l'information présentée sur la carte tactile.

En outre, la structure en plusieurs couches alourdit la carte de mobilité, qui occupe beaucoup d'espace et n'est pas facile à transporter partout.

Jusqu'à présent, la solution consiste à intégrer une localisation et un équipement audio, par exemple GPS, à la carte de mobilité susmentionnée. Cependant, cette solution rend une carte trop chère et non abordable pour tous les utilisateurs.
Le document US 2012/123784 décrit une méthode pour fournir des symboles tactiles séquencés à signification multiple pour produire des messages de mots synthétiques comprenant des mots, des expressions et des phrases, impliquant l'accès à un mot, à un phonème ou à un message de mot.

### Divulgation de l'invention

La présente invention concerne un système de représentation spatiale de régions d'intérêt pour une personne mal ou non-voyante comme défini à la revendication indépendante 1 ainsi que la méthode correspondante comme définie à la revendication indépendante 3.

La présente invention propose un nouveau système pour aider une personne mal ou non-voyante à obtenir l'information structurale d'une zone en associant une information audio à chaque symbole et/ou pictogramme qu'elle peut toucher. Ceci est réalisé en transformant un signal de pression exercé sur un symbole/pictogramme en un signal électronique servant de signal d'entrée dans un boîtier audio électronique. Ce boîtier audio électronique lit un enregistrement audio suite à l'action de l'utilisateur qui appuie sur le symbole/pictogramme spécifique.

En même temps, la présente invention vise à utiliser plusieurs cartes tactiles avec le même boîtier électronique audio. Les cartes tactiles peuvent être combinées ou séparées de la boîte électronique audio afin que les cartes puissent être empilées ensemble pour économiser de l'espace pour le stockage et le transport. Pour visiter différents endroits, l'utilisateur doit simplement installer le plan tactile approprié sur le boîtier audio électronique.

Enfin, l'interaction entre le plan tactile et le boîtier audio électronique est réalisée d'une manière simple et à un coût abordable pour chaque utilisateur.

La présente invention concerne un système de représentation spatiale de régions d'intérêts pour les personnes déficientes visuelles, qui comprend :
- Au moins un plan tactile comprenant une surface supérieure et une surface inférieure, le plan tactile présentant des repères tactiles sur la surface supérieure et des zones de contact correspondantes sur la surface inférieure, chaque repère tactile étant structurellement lié à une région d'intérêt.
- Un clavier avec une matrice de points de contact configurés pour entrer en interaction avec les zones de contact correspondantes en réaction à une pression exercée sur le plan tactile positionné sur le clavier.
- Une boîte électronique audio pouvant être actionnée par le clavier, la boîte électronique audio étant pourvue d'une multitude d'enregistrements audio, chaque enregistrement audio étant associé à chaque repère tactile sur la surface supérieure dudit plan tactile.

Dans une réalisation spécifique, le clavier est un clavier à membrane à coupelle, les points de contact du clavier étant réalisés par des coupelles.

Dans une variante, le plan tactile et le boîtier électronique contiennent tous deux un dispositif de communication en champ proche (NFC) pour l'identification.

La présente invention concerne également une méthode d'opération d'un système selon l'une quelconque des réalisations mentionnées ci-dessus, le procédé comprenant les étapes de :
- installation d'un plan tactile en positionnant sa face arrière sur le clavier ,
- identification du plan tactile installé par le boîtier audio électronique,
- transformation, par le clavier, d'une pression appliquée sur un repère tactile du plan tactile en un signal électronique transmis au boîtier électronique audio, et sélection de l'enregistrement audio associé au repère tactile,
- lecture, par le boîtier électronique, des enregistrements audios sélectionnés pour fournir des informations sur la région d'intérêt correspondant au repère tactile pressé.

La présente invention concerne également une méthode de fabrication d'un système dans laquelle le plan tactile est fabriqué par la technologie de l'impression tridimensionnelle en polymère.

### Schéma

D'autres avantages et caractéristiques apparaîtront dans la description détaillée qui suit des réalisations qui ne sont en aucune façon limitatives, ainsi que des schémas ci-joints, dans lesquels:
La figure 1 montre une représentation graphique de la surface supérieure d'un plan tactile selon une réalisation de l'invention.
La figure 2 montre une vue en coupe de la zone de contact sous le plan tactile.
La figure 3 montre la vue latérale du système comprenant le plan tactile, le clavier et le boîtier audio électronique.

### Description détaillée de l'invention

Un système de représentation spatiale des régions d'intérêt pour les personnes mal et non-voyantes comprend au moins un plan tactile, un clavier et une boîte audio électronique superposés pour former un ensemble. Entre le plan tactile et le clavier, il y a un contact physique, grâce auquel un signal de pression appliquée sur plan tactile est transféré au clavier. Le clavier transforme le signal de pression reçu en signal électronique de sortie. Entre le clavier et le boîtier audio électronique, il y a des connexions électroniques. Chaque signal électronique de sortie du clavier sélectionne précisément un enregistrement audio correspondant dans le boîtier électronique audio. Les paragraphes suivants expliquent en détail la structure et la fonction de chaque composante du système.

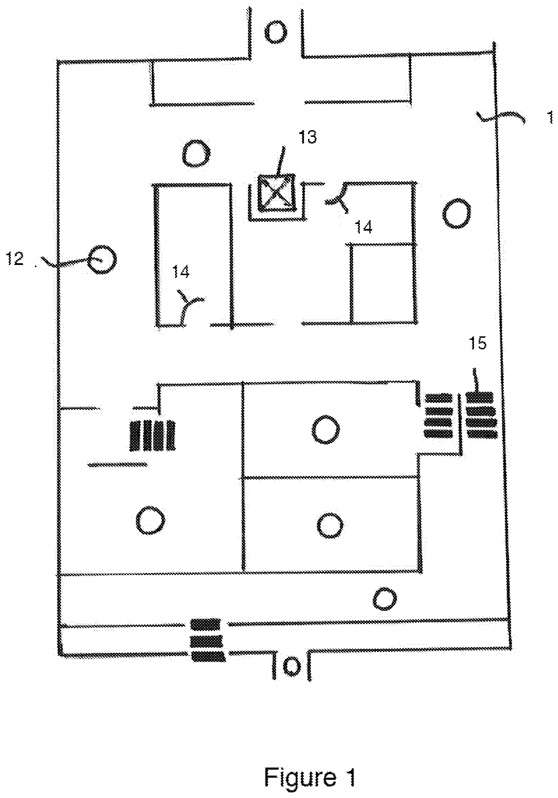

La figure 1 montre une surface supérieure d'un plan tactile selon un exemple de représentation de l'invention. Il s'agit d'une représentation graphique d'un étage de bâtiment. Un groupe de repères tactiles, par exemple des symboles et des pictogrammes, montrent une représentation spatiale de différentes régions du bâtiment. Les repères tactiles sont positionnés de manière sélective sur ledit plan tactile figure 1 pour indiquer clairement à une personne la relation spatiale entre les différentes régions rencontrées dans ce bâtiment. Une personne connaissant la définition des repères tactiles peut toucher le plan d'étage de la figure 1 et comprendre les positions des pièces, bureaux, portes et escaliers en rapport avec ce bâtiment, par exemple. Même une personne, qui ne connaît pas la signification des symboles, peut comprendre le plan en appuyant sur les repères tactiles et en écoutant l'explication du sens lié à chacun.

A fin d'illustration, les cercles 12 de la figure 1 représentent les panneaux d'information qu'une personne peut trouver sur le mur du bâtiment. Les lignes représentent des pièces ou bureaux fermés partagés ou divisés. Le symbole 13 représente un ascenseur et se compose d'un polygone à 4 faces gravé avec un élément en forme de croix à l'intérieur. Le symbole 14 représente une porte et se compose d'un demi arc gravé, qui représente le sens de rotation de la porte. Le symbole 15 représente les escaliers et se compose d'épaisses barres parallèles.

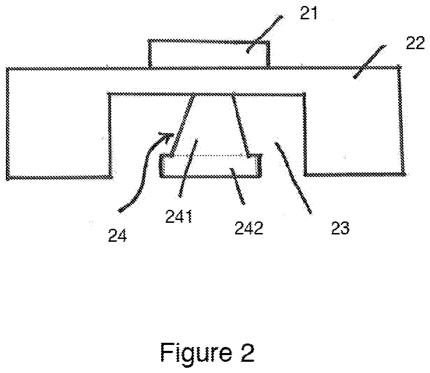

La figure 2 est une vue en coupe des détails structuraux du plan tactile. Une zone de symbole 21 est surélevée sur le dessus de la surface et est généralement d'une taille de 10×10mm pour donner une agréable sensation de toucher. Sous la zone de symbole 21 se trouve un plan d'appui 22 avec une épaisseur comprise entre 0,2 et 0,4 mm, ce qui donne une bonne résistance du plan d'appui et une flexibilité nécessaire pour se plier sous la pression. Sous le plan d'appui 22 se trouve une zone creuse cylindrique 23 pour fournir une bonne flexibilité au plan d'appui. Au milieu de la zone creuse 23, il y a une zone de contact 24 en forme d'haltère. Cette zone de contact 24 est composée de deux parties, une colonne 241 en forme trapézoïdale pour garder une bonne flexibilité de la zone du symbole, et un disque 242 au bas du trapèze pour obtenir un positionnement facile par rapport au clavier. Le diamètre du disque est plus petit que la taille de la zone du symbole, mais suffisamment grand pour avoir une bonne tolérance de positionnement par rapport au clavier.

Fabriquer le plan tactile grâce à la technologie d'impression tridimensionnelle (3D) est un réel avantage. Plus particulièrement, il existe au moins deux types de technologies d'impression 3D convenant à la fabrication du plan tactile, l'une basée sur le matériau fourni sous forme de fils, l'autre basée sur le matériau fourni sous forme de granules. Selon la première technique, le matériau se présente sous la forme d'une bobine de fils, qui est chargée et fondue dans une buse et déposée sur un plateau couche par couche. La deuxième technique consiste à utiliser le matériau sous forme de petites billes, ou granulés, qui sont injectées sur la surface du plan tactile. Le matériau polymère peut être, par exemple du nylon qui est un bon candidat car il possède une certaine souplesse tout en gardant sa forme. Le nylon peut être chargé avec des fibres courtes de carbone pour améliorer la rigidité du plan et pour améliorer l'interaction entre le plan et le clavier situé sous celui-ci, suite à la pression exercée avec le doigt sur le plan. D'autres matériaux peuvent également être utilisés dans la mesure où ils remplissent la fonction susmentionnée. Ce plan tactile est fabriqué avec une épaisseur de 0,4-2 mm, de préférence 1 mm pour donner une grande flexibilité autour des repères tactiles de sorte que lorsqu'une pression est appliquée sur un repère tactile, la région autour de ce repère tactile peut être facilement pliée vers le bas pour transférer la pression au clavier positionné sous le plan tactile.

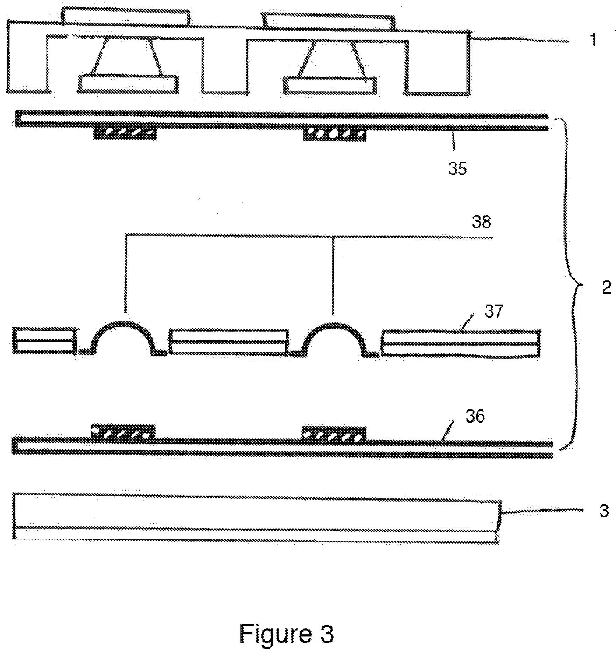

Le paragraphe suivant explique l'interaction entre le plan tactile et le boîtier audio électronique via le clavier. La figure 3 montre la vue latérale du système comprenant le plan tactile 1, le clavier 2 et le boîtier électronique audio 3.

Il y a une identification à deux niveaux entre le plan tactile et la boîte audio électronique : le premier niveau est d'identifier le plan tactile et le deuxième niveau est d'identifier un symbole sur ce plan tactile. Cette identification à deux niveaux permet de localiser une région spécifique sur la carte de mobilité, par exemple, un bureau spécifique à un étage déterminé d'un bâtiment.

Le premier niveau d'identification est pour la reconnaissance d'une série de lieux similaires, par exemple, le niveau différent d'un bâtiment, ou les différentes sections reliées à des passages. Une pluralité de plans tactiles sont fabriqués, chaque plan tactile étant codé avec un pictogramme différent ou un code Braille à reconnaître par le toucher.

Pour la communication avec le boîtier audio électronique, chaque plan tactile intègre une puce de communication en champ proche (NFC). Dès qu'un plan tactile est installé sur une boîte électronique audio, le plan est automatiquement identifié par la boîte électronique audio, qui est également équipée d'une puce NFC.

Le boîtier audio électronique dispose d'une mémoire pour stocker plusieurs enregistrements audios ; chaque enregistrement étant associé à un plan tactile. Lors de l'identification d'un plan tactile spécifique, l'enregistrement audio associé est sélectionné et chargé pour être actif dans le boîtier audio électronique. Ceci permet d'économiser du temps de chargement pour la lecture de l'enregistrement une fois le deuxième niveau d'identification effectué.

Le deuxième niveau d'identification est pour la reconnaissance d'une région spécifique sur un plan tactile. Le signal de pression reçu depuis le repère tactile du plan tactile est transformé en signal électronique et transmis au boîtier électronique audio pour sélectionner un enregistrement spécifique dans l'ensemble des enregistrements audio actifs. Le boîtier audio électronique lit l'enregistrement audio sélectionné.

La transformation et la transmission du signal sont réalisées par l'interaction entre le plan tactile et un clavier. La surface du plan tactile peut être divisée comme une matrice bidimensionnelle (2D), chaque repère sur la face supérieure du plan tactile, associé à une zone de contact en dessous du plan tactile, correspondant à un noeud de la matrice 2D.

Le clavier est également équipé d'une matrice bidimensionnelle de points de contact, chaque point de contact se trouvant à un nœud de la matrice. La matrice du plan tactile et la matrice du clavier se chevauchent de sorte que sous la zone de contact 24 de chaque symbole, il y a un point de contact correspondant sur le clavier. Lorsqu'un symbole est enfoncé sur le plan tactile, la zone de symbole se plie et crée un contact entre la zone de contact du plan tactile et la zone de contact du clavier. Le clavier sélectionne un enregistrement audio dans la boîte électronique audio décrivant la région représentée par le symbole appuyé sur le plan tactile.

Un clavier à dôme est utilisé ici pour plusieurs avantages : fiabilité, rapidité et sensation tactile. Il est prouvé que le clavier à dôme possède une grande robustesse à l'environnement et une réaction rapide à la pression appliquée. De plus, il est intégré à la partie électronique, ce qui permet de fabriquer un produit sur mesure et modulaire à un prix raisonnable.

Le clavier à dôme a la structure d'un sandwich avec différentes couches superposées de haut en bas. Les couches extérieures supérieures et inférieures sont en caoutchouc ou en silicone pour éviter l'humidité. Une fois scellées, elles rendent le clavier étanche à l'eau. Entre les membranes, il y a les plans de circuit supérieur et inférieur 35 et 36, le contact entre eux donne une information de l'emplacement du signal. Et entre les plans de circuit, il y a une couche d'espacement 37 avec soit un dôme individuel 38 situé aux ouvertures de la couche d'espacement, soit une matrice de dômes reliés. Puisque chaque couche peut être fabriquée avec une épaisseur très fine, cette technologie a l'avantage de permettre la production de claviers minces avec des pas de touches réduits.

Les coupoles ont la propriété d'être déformées sous la pression du doigt et de reprendre leur forme dès la pression relâchée. Le dôme du clavier permet d'obtenir la confirmation de la réalisation d'un contact par un sensation tactile. Une pression exercée sur le dôme déclenche instantanément un contact entre les plans de circuit supérieur et inférieur. De plus, ce type de clavier peut être utilisé dans diverses applications à fortes contraintes, comme par exemple dans des domaines nécessitant de la résistance, de l'étanchéité.

Le clavier est placé sur une surface en aluminium de 0,8-1,5 mm d'épaisseur pour avoir une surface plane et rigide.

Lorsqu'un utilisateur entre dans un bâtiment, il peut installer le plan tactile du rez-de-chaussée sur le boîtier électronique audio. Lorsqu'il appuie sur le symbole représentant l'entrée, le signal de pression reçu au niveau de ce symbole est transmis au clavier. L'utilisateur perçoit alors la déformation et la reformation du dôme correspondant. Le signal de pression sur le dôme est transmis à un signal électronique qui sélectionne un enregistrement audio correspondant à l'entrée du rez-de-chaussée de ce bâtiment. Par exemple, le son peut correspondre à une phrase : "Voici l'entrée du rez-de-chaussée, devant un couloir, à gauche un bureau et à droite un escalier".

Alors que l'utilisateur suit les escaliers jusqu'au deuxième étage, il peut reconnaître le plan tactile du deuxième étage en touchant une région précise où il y a un code spécifique, par exemple le code en braille. Lorsqu'il installe le plan tactile du deuxième étage sur la boîte électronique audio et appuie sur le symbole d'entrée, le plan tactile est identifié par la boîte et le signal de pression sur le symbole est transmis. Il entend le son : "Voici l'entrée au deuxième étage, devant un couloir, à gauche un bureau et à droite un escalier".

La présente invention ne concerne pas seulement une carte de mobilité portable, mais aussi une carte de mobilité fixée dans le bâtiment en grand format. Les cartes de mobilité grand format peuvent être fixées sur un meuble à différents endroits au sol ou sur une paroi, par exemple à l'entrée, avant et après chaque escalier, chaque ascenseur. Ces cartes de mobilité grand format ont la même fonction qui fournit aux mal ou non-voyants une information structurale du bâtiment de manière tactile et auditive.

## Revendications

1. Système de représentation spatiale de régions d'intérêt pour une personne mal ou non-voyante, comprenant les éléments suivants :
- Au moins un plan tactile (1) comprenant une surface supérieure et une surface inférieure, le plan tactile (1) présentant des repères tactiles (12,13,14,15) sur la surface supérieure et des zones de contact (24) correspondantes sur la surface inférieure, chaque repère tactile étant structurellement lié à une région d'intérêt,
- Un clavier (2) avec une matrice de points de contact configurés pour entrer en contact avec les zones de contact (24) correspondantes en réaction à une pression exercée sur le plan tactile (1) positionné sur le clavier,
- Une boîte électronique audio (3) pouvant être actionnée par le clavier (2), la boîte électronique audio (3) étant pourvue d'une multitude d'enregistrements audio, chaque enregistrement audio étant associé à chaque repère tactile sur la surface supérieure du plan tactile (1),
le système de représentation spatiale de régions d'intérêt étant sous la forme d'une carte de mobilité,
le plan tactile et le boîtier électronique contiennent tous deux un dispositif de communication en champ proche (NFC) pour l'identification à deux niveau entre le plan tactile et la boîte audio électronique : le premier niveau étant d'identifier le plan tactile et le deuxième niveau est d'identifier un symbole sur ce plan tactile.

2. Système selon la revendication 1, dans lequel le clavier est un clavier à membrane à coupelle, les points de contact du clavier étant réalisés par des coupelles.

3. Méthode d'opération d'un système selon l'une quelconque des revendications précédentes, le procédé comprenant les étapes de :
- installation d'un plan tactile en positionnant sa face arrière sur le clavier,
- identification du plan tactile installé par le boîtier audio électronique,
- transformation, par le clavier, d'une pression appliquée sur un repère tactile du plan tactile en un signal électronique transmis au boîtier électronique audio, et sélection de l'enregistrement audio associé au repère tactile,
- lecture, par le boîtier électronique, des enregistrements audios sélectionnés pour fournir des informations sur la région d'intérêt correspondant au repère tactile pressé.

4. Procédé de fabrication d'un système selon les revendications 1 à 3, dans lequel le plan tactile est fabriqué par la technologie de l'impression tridimensionnelle avec du polymère.

## Patentansprüche

1. System zur räumlichen Darstellung von Regionen von Interesse für eine sehbehinderte oder blinde Person, das die folgenden Elemente umfasst:
- Mindestens eine taktile Ebene (1), die eine obere Oberfläche und eine untere Oberfläche umfasst, wobei die taktile Ebene (1) taktile Markierungen (12, 13, 14, 15) auf der oberen Oberfläche und entsprechende Kontaktbereiche (24) auf der unteren Oberfläche aufweist, wobei jede taktile Markierung strukturell mit einer Region von Interesse verbunden ist,
- Eine Tastatur (2) mit einer Matrix von Kontaktpunkten, die ausgebildet sind, um als Reaktion auf einen Druck, der auf die auf der Tastatur positionierte taktile Ebene (1) ausgeübt wird, mit den entsprechenden Kontaktbereichen (24) in Kontakt zu kommen,
- Eine Audio-Elektronikbox (3), die über die Tastatur (2) betätigt werden kann, wobei die Audio-Elektronikbox (3) mit einer Vielzahl von Audioaufzeichnungen ausgestattet ist, wobei jede Audioaufzeichnung jeder taktilen Markierung auf der oberen Oberfläche der taktilen Ebene (1) zugeordnet ist,
wobei das System zur räumlichen Darstellung von Regionen von Interesse in Form einer Mobilitätskarte vorliegt,
wobei sowohl die taktile Ebene als auch die Elektronikbox eine Nahfeld-Kommunikationsvorrichtung (NFC) für die zweistufige Identifikation zwischen der taktilen Ebene und der Audio-Elektronikbox enthalten: wobei die erste Stufe der Identifizierung der taktilen Ebene dient und die zweite Stufe der Identifizierung eines Symbols auf dieser taktilen Ebene dient.

2. System nach Anspruch 1, wobei die Tastatur eine Muldenmembrantastatur ist, wobei die Kontaktpunkte der Tastatur durch Mulden ausgeführt sind.

3. Verfahren zum Betrieb eines Systems nach einem der vorstehenden Ansprüche, wobei das Verfahren die folgenden Schritte umfasst:
- Installation einer taktilen Ebene durch Positionieren ihrer Rückseite auf der Tastatur,
- Identifikation der installierten taktilen Ebene durch die Audio-Elektronikbox,
- Umwandlung eines Drucks, der auf eine taktile Markierung der taktilen Ebene angelegt wird, durch die Tastatur in ein elektronisches Signal, das an die Audio-Elektronikbox übertragen wird, und Auswahl der der taktilen Markierung zugeordneten Audioaufzeichnung,
- Abspielen der ausgewählten Audioaufzeichnungen von der Elektronikbox, um Informationen über die Region von Interesse zu liefern, die der gedrückten taktilen Markierung entspricht.

4. Verfahren zur Herstellung eines Systems nach den Ansprüchen 1 bis 3, wobei die taktile Ebene durch die Technologie des dreidimensionalen Drucks mit Polymer hergestellt wird.

## Claims

1. System for spatial representation of regions of interest for a visually impaired or blind person, comprising the following elements:
- At least one tactile map (1) comprising a top surface and a bottom surface, the tactile map (1) having tactile reference marks (12, 13, 14, 15) on the top surface and corresponding contact areas on the bottom surface, each tactile reference mark being structurally connected to a region of interest,
- A keyboard (2) with a matrix of contact points configured to come into contact with the corresponding contact areas (24) in response to pressure exerted on the tactile map (1) positioned on the keyboard,
- An electronic audio box (3) which can be actuated by the keyboard (2), the electronic audio box (3) being provided with a multitude of audio recordings, each audio recording being associated with each tactile reference mark on the top surface of the tactile map (1),
the system for spatial representation of regions of interest being in the form of a mobility card,
the tactile map and the electronic box both contain a near-field communication (NFC) device for two-level identification between the tactile map and the electronic audio box: the first level being to identify the tactile map and the second level is to identify a symbol on this tactile map.

2. System according to claim 1, wherein the keyboard is a cap membrane keyboard, the contact points of the keyboard being produced by caps.

3. Method for operating a system according to any one of the preceding claims, the method comprising the steps of:
- installing a tactile map by positioning its rear face on the keyboard,
- identifying the tactile map installed by the electronic audio box,
- transforming, by the keyboard, of a pressure applied on a tactile reference mark of the tactile map into an electronic signal transmitted to the electronic audio box, and selecting the audio recording associated with the tactile reference mark,
- reading, by the electronic box, audio recordings selected to provide information about the region of interest corresponding to the pressed tactile reference mark.

4. Method for manufacturing a system according to claims 1 to 3, wherein the tactile map is made by polymer three-dimensional printing technology.
